# EUROPEAN PATENT SPECIFICATION

(11) **EP 1 220 615 B1**
(45) Date of publication and mention of the grant of the patent: **22.06.2011**
(21) Application number: 01961934.5
(22) Date of filing: 07.08.2001
(51) Int. Cl.: A23G 4/08

(54) **ENVIRONMENTALLY FRIENDLY CHEWING GUMS INCLUDING LECITHIN**
LECITHINENTHALTENDE UMWELTFREUNDLICHE KAUGUMMIS
GOMMES A MACHER RESPECTANT L'ENVIRONNEMENT ET CONTENANT DE LA LECITHINE

(30) Priority: 25.08.2000 US 648033
(43) Date of publication of application: 10.07.2002
(73) Proprietor: WM. WRIGLEY JR. COMPANY, Chicago, IL 60611-5599 (US)
(72) Inventor: PATEL, Mansukh, M., Downers Grove, IL 60515 (US); MONEN, George, W., IV, Woodridge, IL 60435 (US); PHILLIPS, David, R., III, Crest Hill, IL 60435 (US); SHEN, Chungsea, A., Deerfield, IL 60015 (CN)
(74) Representative: Rickard, David John
(86) International application number: PCT/US2001/024714
(87) International publication number: WO 2002/017730

(56) References cited:
- EP-A- 0 066 864
- WO-A-01/24640
- US-A- 4 246 286
- US-A- 4 379 169
- US-A- 4 452 820
- US-A- 4 518 615
- US-A- 4 794 003
- US-A- 5 431 930

## Description

### BACKGROUND OF THE INVENTION

The present invention relates generally to chewing gum compositions and methods for making same. More specifically, the present invention relates to chewing gum compositions that produce gum cuds having reduced adhesion as compared to typical chewing gum compositions.

Chewing gum-like substances have been enjoyed for hundreds of years. In the nineteenth century, the predecessor to today's chewing gum compositions were developed. Today, chewing gum is enjoyed daily by millions of people world wide.

When chewing gum is chewed, a water insoluble gum cud remains. Typically, gum cuds are mainly composed of a water insoluble portion that is represented by the gum base. The gum cud is usually disposed of in the wrapper that initially houses the chewing gum. Of course, the gum cud can be disposed of in other substrates by wrapping the substrate around the gum cud. There are a variety of other ways and methods for disposing gum cuds.

Although gum cuds can be easily disposed of without creating any problems, gum cuds, when improperly disposed of, can create environmental issues. In this regard, the improper disposal of chewing gum, e.g. expectorating the chewing gum on a sidewalk, floor, or like area, can create a nuisance. Due to their typical formulation, gum cuds have an adhesive-like characteristic. Therefore, the chewed gum cuds can stick to environmental surfaces onto which they are intentionally or unintentionally placed. This can create issues if the gum cuds are improperly discarded. Such environmental surfaces can include concrete, flooring materials, walls, fabric, carpeting, metal, wood, plastic, glass, and other surfaces.

There have been a number of attempts to provide biodegradable chewing gum and/or environmentally friendly chewing gum. Published PCT Application No. WO-00-19837 discloses plasticized poly(D,1-lactide)polymers that are used to create biodegradable chewing gum bases. Published PCT Application No. WO-98-58550 discloses lactic acid-based co-polymers for use as a masciatory substance. U.S. Patent No. 5,672,367 sets forth biodegradable chewing gums based on poly(lactic acid-co-caprolactone) elastomers. Other patents relating to environmentally friendly chewing gum and gum bases, modified gum bases, or methods of removing adhered cuds include: WO 92-008836, Use of Ricinoleate Derived Compound to Remove Chewing Gum Adhering to Surfaces; WO 96-028041, Environmentally Friendly Chewing Gum Compositions Containing Elastic Protein Based Polymers; WO 98-058550, Environmentally Friendly Gum; EP 0,421,670, Non-Tack Chewing Gum Base; US 3,984,574, Non-Tack Chewing Gum Composition; US 5,580,590, Protein Based Elastomers Useful in Compounding Biodegradable Bases; JP 96-131082A, Low Tack Gum Base and Chewing Gum; JP 88-007747A, Chewing Food Base Composed of Proteins and Tannin; EP 0,079,082, New Gum Base, A Method For Preparing and Chewing Gum Containing Same; BP 0,711,506, Biodegradable Gum With Base Having Biodegradable Polymers; US 4,518,615, Non-Adhesive Gum Base; US 5,424,081, Chewing Gum; and WO 96-020609, Non-Stick Chewing Gum.

US 4,518,615 discloses a chewing gum base composition that does not adhere to dentures, removable and fixed oral prosthetic devices, fillings or natural teeth. The chewing gum base composition includes an elastomer, elastomer solvent, polyvinyl acetate, emulsifier, low molecular weight polyethylene, waxes, plasticizer and fillers.

EP0066864 discloses a homogenous gum base composition which includes a properly plasticised elastomer component and a properly plasticised resin component, and optionally, a third component having fillers, emulsifiers, and/or softening agents, texturizing agents and waxes normally associated with production of chewing gum base. This invention also includes a method of preparing the novel chewing gum base as well as their use in a chewing gum.

### SUMMARY OF THE INVENTION

The present invention provides chewing gums that are environmentally friendly. As used herein, the term "environmentally friendly" refers to chewing gum compositions that can be easily removed from indoor or outdoor surfaces.

It has been surprisingly found that by reducing and/or eliminating inert filler from gum base and adding to the base or chewing gum formulation high levels of lecithin, it is possible to produce a chewing gum wherein the resultant gum cud has improved removability from surfaces.

To this end, in an embodiment, the present invention provides a chewing gum comprising: a water soluble portion including a flavour; a water insoluble gum base portion that does not include added filler; and at least 5% by weight lecithin.

In one embodiment, the water soluble gum base portion includes, an elastomer, a softener, a resin, an emulsifier; and an elastomer solvent.

In an embodiment, the elastomer comprises approximately 3% to about 50% by weight of the gum base, the softener comprises approximately 3% to about 50% by weight of the gum base, the emulsifier comprises approximately 2% to about 20% by weight of the gum base, the resin comprises approximately 5% to about 75% by weight of the gum base, and the elastomer solvent comprises approximately 3% to about 70% by weight of the gum base.

In an embodiment, the chewing gum is sugar free.

It is an advantage of the present invention to provide a more environmentally friendly chewing gum base.

It is a further advantage of the present invention to provide a chewing gum that is environmentally friendly.

Moreover, an advantage of the present invention is to provide a chewing gum composition that will produce a resultant gum cud that, if improperly discarded onto a surface, can be easily removed therefrom.

Furthermore, an advantage of the present invention is to provide a method for manufacturing chewing gum that produces chewing gum that when chewed produces gum cuds that have reduced adhesion.

Additional features and advantages of the present invention are described in and will be apparent from the detailed description of the presently preferred embodiments.

### DETAILED DESCRIPTION OF THE PRESENTLY PREFERRED EMBODIMENTS

The present invention provides improved chewing gum. To this end, the present invention provides chewing gums that produce more environmentally friendly gum cuds. In this regard, the chewing gum when chewed results in gum cuds that have reduced adhesion.

It has been surprisingly found that chewing gums that include high levels of lecithin and do not include filler in the gum base produce gum cuds that if improperly discarded have reduced adhesion to environmental surfaces such as wood, concrete, fabric, carpet, metal and other such surfaces. Typically, gum bases include fillers. These fillers are inert organic powders such as calcium carbonate, magnesium carbonate, ground limestone, and silica type compounds such as magnesium and aluminum silicate, clay, alumina, talc, titanium dioxide, calcium phosphate and combinations thereof. The fillers can be removed from typical gum base formulations and replaced with other ingredients such as plasticizers or elastomers. By adjusting the levels of plasticizers and elastomers, this will compensate for any change in texture, taste, and overall quality of the product.

It has been found that by eliminating these fillers from gum bases and adding high levels of lecithin, that the resultant chewing gum, when chewed, will produce gum cuds having reduced adhesion to environmental surfaces. It is believed that eliminating the fillers from the gum base prevents the fillers from mixing with the active elements of the gum base (e.g. polymers, softeners, and flavors) causing a decrease in gum cud removal times. The addition of lecithin, especially at high levels, is believed to act as a partioning agent between high molecular weight materials. Due to the absence of filler materials, the polar end of the lecithin remains free while the non-polar end of the lecithin remains attached to the high molecular weight materials. This results in a solid, but looser matrix of gum components. This matrix affords improved removability from surfaces characteristics to the gum cud.

Lecithin is a complex, naturally occurring mixture of phospholipids that most often is obtained from soybean oil. Phospholipids function as the surface-active portion of lecithin; this portion affords lecithin most of its functional properties. The addition of lecithin to the gum formulation allows for various substances (such as oil and water) in the gum matrix to more easily blend together.

Lecithin can be added to the chewing gum formulation so that it comprises approximately 5.0% to about 15.0% by weight of the chewing gum formulation. Further, in an embodiment, the chewing gum may comprise approximately 5.0% to about 9.0% lecithin in the formulation. In a gum base formulation, lecithin may comprise approximately 20% to about 50% lecithin and in an embodiment, approximately 30% to about 40% lecithin.

A variety of different chewing gums can be created pursuant to the present invention. Such chewing gums can include sugar gums, sugarless gums, bubble gums, coated gums, and novelty gums. Such chewing gums can be formed in the shape of pellets, sticks, tabs, or chunks. A variety of different chewing gum formulations are possible.

Chewing gum generally comprises a water soluble portion and a water insoluble portion. The water insoluble portion is referred to as the gum base.

Pursuant to the present invention the water-insoluble portion of the gum typically may contain any combination of elastomers, vinyl polymers, elastomer plasticizers, softeners, waxes and other optional ingredients such as colorants and antioxidants. The variety of gum base ingredients typically used provide the ability to modify the chewing characteristics of gums made from the gum base.

Elastomers provide the rubbery, cohesive nature to the gum which varies depending on this ingredient's chemical structure and how it is compounded with other ingredients. Elastomers suitable for use in the gum base and gum of the present invention include butadiene-styrene copolymers (SBR), isobutylene-isoprene copolymers (Butyl rubber), polybutadiene, polyisobutylene, and vinyl polymeric elastomers (polyvinyl acetate, polyethylene, vinyl acetate/vinyl laurate, vinyl acetate/vinyl stearate, ethylene/vinyl acetate) or mixtures thereof.

Other optional ingredients such as antioxidants may also be used in the gum base.

Antioxidants prolong shelf-life and storage of gum base, finished gum or their respective components including fats and flavor oils. Antioxidants suitable for use in gum base or gum of the present invention include butylated hydroxyanisole (BHA), butylated hydroxytoluene (BHT), beta-carotenes, tocopherols, acidulants such as Vitamin C, propyl gallate, and other synthetic and natural types or mixtures thereof.

Preferably, the antioxidants used in the gum base are butylated hydroxyanisole (BHA), butylated hydroxytoluene (BHT), tocopherols, or mixtures thereof.

Waxes may be used in the gum base. Waxes aid in the solidification of gum bases and improving the shelf-life and texture. Wax crystal also improves the release of flavor. The smaller crystal size allows slower release of flavor since there is more hindrance of the flavor's escape from this wax versus a wax having larger crystal sizes.

Synthetic waxes are produced by means atypical of petroleum wax production and thus are not considered petroleum wax. These synthetic waxes may be used in accordance with the present invention and may be included optionally in the gum base and gum.

The synthetic waxes may include waxes containing branched alkanes and copolymerized with monomers such as but not limited to polypropylene and polyethylene and Fischer-Tropsch type waxes. Polyethylene wax is not in the same category as polyethylene, a polymer of ethylene monomers. Rather, polyethylene wax is a synthetic wax containing alkane units of varying lengths having attached thereto ethylene monomers.

Wax-free gum bases are specifically contemplated by the present invention. In these embodiments, wax is omitted and may be compensated for by using increased levels of fats and oils as is known in the prior art.

Elastomer plasticizers vary the firmness of the gum base. The plasticizers are glycerol ester of partially hydrogenated rosin, glycerol ester of polymerized rosin, glycerol ester of partially dimerized rosin, glycerol ester of rosin, glycerol ester of tall oil rosin, pentaerythritol esters of partially hydrogenated rosin, partially hydrogenated methyl esters of rosin, pentaerythritol ester of rosin, synthetic elastomer plasticizers such as terpene resins derived from alpha-pinene, beta-pinene and/or d-limonene and mixtures thereof.

The elastomer plasticizers used may be of one type or of combinations of more than one. Typically, the ratios of one to the other are dependent on each respective softening point, on each effect on flavor release, and on each respective degree of tack they cause to the gum.

Base softeners include fats which modify the texture of the gum base by introducing sharp melting transition during chewing. Fats suitable for use in the gum base and gum of the present invention include triglycerides of non-hydrogenated, partially hydrogenated and fully hydrogenated cottonseed oil, soybean oil, palm oil, palm kernel oil, coconut oil, safflower oil, tallow oil, cocoa butter, medium chained triglycerides and the like.

The preferred fats include unsaturated, partially saturated or fully saturated oils that contain, as one or more of their constituent groups, fatty acids of carbon chain length of from 6 to 18, Monoglycerides, diglycerides, acetylated monoglycerides, distilled mono- and diglycerides and lecithin may, from their manufacturing processing contain triglyceride levels less than 2 percent by weight, Mono- and diglycerides maybe considered as being of the same family as fats (triglycerides), or would be in a family of their own, namely emulsifiers.

Flavorants and colorants impart characteristics or remove or mask undesired characteristics. Colorants may typically include FD&C type lakes, plant extracts, fruit and vegetable extracts and titanium dioxide. Flavorants may typically include cocoa powder, heat-modified amino acids and other vegetable, extracts.

Gum bases are typically prepared by adding an amount of the elastomer and plasticizer to a heated 10-115.5°C (50-240°F) sigma blade mixer with a front to rear speed ratio of from about 1.2:1 to about 2:1, the higher ratio typically being used for chewing gum base which requires more rigorous compounding of its elastomers.

Compounding typically begins to be effective once the ingredients have massed together. Anywhere from 15 minutes to 90 minutes may be the length of compounding time. Preferably, the time of compounding is from 20 minutes to about 60 minutes, The amount of added plasticizer depends on the level of elastomer present. If too much elastomer plasticizer is added, the initial mass becomes over plasticized and not homogeneous.

Continuous processes using mixing extruders may also be used to prepare the gum base. After the initial ingredients have messed homogeneously and been compounded for the time desired, the balances of the base ingredients are added in a sequential manner until a completely homogeneous molten mass is attained. Typically, any remainder of elastomer and plasticizer are added within approximately 60 minutes after the initial compounding time. The optional waxes and the oils are typically added after the elastomer and plasticizers and during the next 60 minutes. Then the mass is allowed to become homogeneous before discharging.

Typical base batch processing times may vary from about one to about three hours, preferably from about 1 ½ to 2 ½ hours, depending on the formulation. The final mass temperature when discharged may be between 50°C and 130°C and preferably between 70°C and 120°C. The completed molten mass is emptied from the mixing kettle into coated or lined pans, extruded or cast into any desirable shape and allowed to cool and solidify. Those skilled in the art will recognize that many variations of the above described procedure may be followed.

In the alternative continuous process, ingredients are added continuously at various points along the length of the extruder. In this case, the transmit time through the extruder would be substantially less than an hour.

The water-soluble portion of the chewing gum may comprise softeners, sweeteners, flavoring agents and combinations thereof. The sweeteners often fill the role of bulking agents in the gum. The bulking agents generally comprise from approximately 5 percent to about 90 percent, preferably from approximately 20 percent to about 80 percent.

Softeners are added to the chewing gum in order to optimize the chewability and mouth feel of the gum. Softeners typically constitute from approximately 0.5 percent to about 25.0 percent by weight of the chewing gum. Softeners contemplated for use in the gum include glycerin, lecithin and combinations thereof. Further, aqueous sweetener solutions such as those containing sorbitol, hydrogenated starch hydrolysates, corn syrup and combinations thereof may be used as softeners and bulking agents in gum. Sugar-free formulations are also typical.

Sugar sweeteners generally include saccharide-containing components commonly known in the chewing gum art which comprise, but are not limited to, sucrose, dextrose, maltose, dextrin, dried invert sugar, fructose, levulose, galactose, corn syrup solids and the like, alone or in any combination.

The present invention can also be used in combination with sugarless sweeteners. Generally, sugarless sweeteners include components with sweetening characteristics but which are devoid of the commonly known sugars and comprise, but are not limited to, sugar alcohols such as sorbitol, mannitol, xylitol, hydrogenated starch hydrolyzates, maltitol and the like, alone or in any combination.

Depending on the particular sweetness release profile and shelf-life stability needed, the present invention can also be used in combination with coated or uncoated high-intensity sweeteners or with high-intensity sweeteners coated with other materials and by other techniques.

High-intensity sweeteners, or artificial sweeteners and peptide sweeteners as they may be referred to, typically may include, but are not limited to, alitame, thaumatin, aspartame, sucralose, acesulfame, saccharin and dihydrochalcones. The range of these sweetener types in gum typically may range from approximately 0.02 to about 0.10 weight percent for sweeteners such as alitame, thaumatin and dihydrochalcones, and from approximately 0.1 to about 0.3 weight percent for sweeteners like aspartame, sucralose, acesulfame and saccharin.

A flavoring agent may be present in the chewing gum in an amount within the range of from approximately 0.1 to about 10.0 weight percent and preferably from approximately 0.5 to about 3.0 weight percent of the gum. The flavoring agents may comprise essential oils, synthetic flavors, or mixtures thereof including, but not limited to, oils derived from plants and fruits such as citrus oils, fruit essences, peppermint oil, spearmint oil, close oil, oil of wintergreen, anise and the like. Artificial flavoring components are also contemplated for use in gums of the present invention. Those skilled in the art will recognize that natural and artificial flavoring agents may be combined in any sensory acceptable blend. All such flavors and flavor blends are contemplated for use in gums of the present invention.

Optional ingredients such as colors, emulsifiers and pharmaceutical agents may be added to the chewing gum.

In general, chewing gum is manufactured by sequentially adding the various chewing gum ingredients to a commercially available mixer known in the art. After the initial ingredients have been thoroughly mixed, the gum mass is discharged from the mixer and shaped into the desired form such as by rolling into sheets and cutting into sticks, extruded into chunks or casting into pellets.

Generally, the ingredients are mixed by first melting the gum base and adding it to the running mixer. The base may also be melted in the mixer itself. Color or emulsifiers may also be added at this time. A softener such as glycerin may also be added at this time, along with syrup and a portion of the bulking agent/sweetener. Further portions of the bulking agent/swestener may then be added to the mixer. A flavoring agent it typically added with the final portion of the bulking agent/sweetener. A high-intensily sweetener is preferably added after the final portion of bulking agent and flavor have been added.

The entire miking procedure typically takes from five to fifteen minutes, but longer mixing times may sometimes be required. Those skilled in the art will recognize that many variations of the above described procedure may be followed. Again, one specifically contemplated embodiment is the use of an extruding mixer for continuous processing. In such a process, ingredients are added continuously at various points along the length of the extruder while homogeneously mixed gum continuously issues from the discharge end of the extruder.

By way of example, and not limitation, examples of the present invention are set forth below,

### Example 1

A conventional gum base having the following formulation was prepared:

| | % |
|---|---|
| Terpene Resin | 28.90 |
| Hydrogenated Vegetable Oil | 14.76 |
| Lecithin | 3.00 |
| Polyisobutylene | 2.57 |
| Polyvinylacetate (PVA) | 27.64 |
| Calcium Carbonate | 12.31 |
| Isobutytene-Isoprene Copolymer | 10.77 |
| Butylated Hydroxytoluene | 0.05 |
| | 100.00 |

### Example 2

A Gum base formulations used in the chewing gum of the present invention was prepared using the following base ingredients:

| | % |
|---|---|
| Isobutylene-Isoprene Copolymer | 12.98 |
| Polyvinylacetate (PVA) | 28.00 |
| Terpene Resin | 28.80 |
| Glycerol Monosterate | 7.20 |
| Hydrogenated Vegetable Oil | 22.40 |
| Calcium Carbonate* | 0.52 |
| BHA | 0.10 |
| | 100.00 |

| | |
|---|---|
| *Calcium carbonate is present due to contamination from other ingredients. | |

### Example 3

A Gum base used in the chewing gum of the present invention was prepared using the following base ingredients:

| | % |
|---|---|
| Wax | 17.25 |
| BHA | 0.10 |
| Terpene Resin | 9.00 |
| Iaobutylene-Isoprene Copolyer | 11.00 |
| Glycerol Ester | 25.81 |
| Hydrogenated Vegetable Oil | 19.67 |
| Calcium Carbonate* | 0.40 |
| Polyvinylacetate (PVA) | 10.57 |
| Palm Oil | 6.00 |
| Lecithin | 0.20 |
| | 100.00 |

| | |
|---|---|
| *Calcium carbonate is present due to contamination from other ingredients, | |

Chewing gums were prepared according to the following formulas:

| | **Example 4 (Comparative)** | **Example 5 (Inventive)** | **Example 6 (Inventive)** |
|---|---|---|---|
| Gum Base of Example 1 | 32.00 | -- | -- |
| Gum Base of Example 2 | -- | 32.24 | 32.24 |
| Sorbitol | 43.00 | 48.00 | 48.00 |
| Glycerin | 7.50 | 11.00 | 11.00 |
| Encapsulated Aspartame | 0.16 | -- | -- |
| Free Asparatame | -- | 0. 16 | 0.16 |
| Menthol | 0.65 | 0.10 | 0.10 |
| Calcium Carbonate | 15.19 | -- | -- |
| MCTS | -- | -- | 2. 00 |
| Lecithin | -- | 7.00 | 5.00 |
| Flavor | 1.50 | 1.50 | 1.50 |
| | 100.00% | 100.00% | 100.00% |

| | **Example 7 (Inventive)** | **Example 8 (Inventive)** | **Example 9 (Inventive)** |
|---|---|---|---|
| Gum Base of Example 2 | -- | 32. 24 | - |
| Gum Base of Example 3 | 32.24 | -- | 32.24 |
| Sorbitol | 48.00 | 48.00 | 48.92 |
| Glycerin | 11.00 | 11.00 | 12.00 |
| Free Asparatame | 0.16 | 0.16 | 0.10 |
| Encapsulated | -- | -- | 0. 14 |
| Acesulfame K Menthol | 0.10 | 0.10 | 0.10 |
| Lecithin | 7.00 | 7.00 | 5.00 |
| Flavor | 1.50 | 1.50 | 1.50 |
| | 100.00% | 100.00% | 100.00% |

The chewing gums from Examples 3-7 were tested for adhesion to concrete according to the following method:
   Gum pieces were soaked in water overnight to remove the water-soluble components. The cuds were then applied to concrete blocks using 200 pounds of pressure for thirty seconds.
   Two additional concrete blocks were placed on top of the block, which retained the compressed gum cud for three days.

After the three days, the two top blocks were removed, and the bottom concrete block with the compressed gum cud was maintained at room temperature for another three days. Next, a high-pressure spray washer, using a water temperature of 85°C (185°F) and 206 x 10⁶ Pa (3000 psi) pressure, was used to remove the cud.

The time to remove and the percent reduction of the cuds were noted.

Results for each sample (average n=3) were as follows:

| | **Time (seconds)** | **Reduction %** |
|---|---|---|
| **Ex. 4 (Comparative)** | 10.30 | 0.00 |
| **Ex. 5 (Inventive)** | 6.11 | 40.68 |
| **Ex. 6 (Inventive)** | 5.82 | 43.50 |
| **Ex. 7 (Inventive)** | 5.53 | 46.31 |
| **Ex. 8 (Inventive)** | 4.85 | 52.91 |

As is apparent from the above, the inventive gum exhibited much less ashesion than the comparative gum.

Sensory benchmark analysis were also completed on all the samples tested for removability. The inventive samples were found to be comparable in taste to the control (Example 4).

## Claims

1. A chewing gum comprising:
a water soluble portion including a flavor;
a water insoluble gum base portion that does not include added filler;
and at least 5% by weight lecithin.

2. The chewing gum of Claim 1 wherein the chewing gum is sugar free.

3. The chewing gum of Claim 1 wherein the water insoluble gum base portion includes:
an elastomer;
a softener;
a resin;
an emulsifier;
and an elastomer solvent.

4. The chewing gum of Claim 1 wherein:
the elastomer comprises approximately 3% to about 50% by weight of the water insoluble gum base portion;
the softener comprises approximately 3% to about 50% by weight of the water insoluble gum base portion;
the emulsifier comprises approximately 2% to about 20% by weight of the water insoluble gum base portion;
the resin comprises approximately 5% to about 75% by weight of the water insoluble gum base portion;
and the elastomer solvent comprises approximately 3% to about 70% by weight of the water insoluble gum base portion.

## Patentansprüche

1. Kaugummi, das Folgendes umfasst:
einen wasserlöslichen Anteil, der einen Aromastoff enthält;
einen wasserunlöslichen Gummibasisanteil, der keinen hinzugefügten Füllstoff enthält;
und mindestens 5 Gew.-% Lecithin.

2. Kaugummi nach Anspruch 1, wobei das Kaugummi zuckerfrei ist.

3. Kaugummi nach Anspruch 1, wobei der wasserunlösliche Gummibasisanteil Folgendes umfasst:
ein Elastomer;
einen Weichmacher;
ein Harz;
einen Emulgator;
und ein Elastomerlösungsmittel.

4. Kaugummi nach Anspruch 1, wobei:
das Elastomer etwa 3 bis etwa 50 Gew.-% des wasserunlöslichen Gummibasisanteils umfasst;
der Weichmacher etwa 3 bis etwa 50 Gew.-% des wasserunlöslichen Gummibasisanteils umfasst;
der Emulgator etwa 2 bis etwa 20 Gew.-% des wasserunlöslichen Gummibasisanteils umfasst;
das Harz etwa 5 bis etwa 75 Gew.-% des wasserunlöslichen Gummibasisanteils umfasst;
und das Elastomerlösungsmittel etwa 3 bis etwa 70 Gew.-% des wasserunlöslichen Gummibasisanteils umfasst.

## Revendications

1. Gomme à mâcher comprenant :
une partie hydrosoluble comprenant un arôme ;
une partie de base de gomme insoluble dans l'eau, ne comprenant aucun agent de remplissage ajouté ;
et au moins 5 % en poids de lécithine.

2. Gomme à mâcher selon la revendication 1, dans laquelle la gomme à mâcher est sans sucre.

3. Gomme à mâcher selon la revendication 1, dans laquelle la partie de base de gomme insoluble dans l'eau comprend :
un élastomère ;
un ramollissant;
une résine;
un émulsifiant ;
et un solvant élastomère.

4. Gomme à mâcher selon la revendication 1, dans laquelle:
l'élastomère compte pour environ 3 à environ 50 % en poids de la partie de base de gomme insoluble dans l'eau ;
le ramollissant compte pour environ 3 à environ 50 % en poids de la partie de base de gomme insoluble dans l'eau ;
l'émulsifiant compte pour environ 2 à environ 20 % en poids de la partie de base de gomme insoluble dans l'eau ;
la résine compte pour environ 5 à environ 75 % en poids de la partie de base de gomme insoluble dans l'eau ;
et le solvant élastomère compte pour environ 3 à environ 70 % en poids de la partie de base de gomme insoluble dans l'eau.
